Europäisches Patentamt

European Patent Office

Office européen des brevets

(19)

(11) Veröffentlichungsnummer: **0 109 595**
**A2**

(12) # EUROPÄISCHE PATENTANMELDUNG

(21) Anmeldenummer: **83111054.9**

(22) Anmeldetag: **05.11.83**

(51) Int. Cl.³: **A 47 J 37/07**

(30) Priorität: 18.11.82 DE 3242533
27.12.82 DE 3248158

(43) Veröffentlichungstag der Anmeldung:
30.05.84 Patentblatt 84/22

(84) Benannte Vertragsstaaten:
AT BE CH DE FR GB IT LI LU NL

(71) Anmelder: A N A S C O GmbH
Aarstrasse 1
D-6200 Wiesbaden(DE)

(72) Erfinder: Kretzschmann, Günter
Berliner Strasse 17
D-6531 Münster-Sarmsheim(DE)

(74) Vertreter: Laudien, Dieter, Dr. et al,
Boehringer Ingelheim Zentrale GmbH ZA Patente
D-6507 Ingelheim am Rhein(DE)

(54) **Einmal-Grillset.**

(57) Die Erfindung betrifft einen einfach anzuwendenden und kostengünstigen Einmal-Grillset, der aus einer mit Luftschlitzen versehenen Aluminiumwanne mit Längsstegen besteht, wobei in die Zwischenräume zwischen den Längsstegen Grillanzündermasse eingegossen bzw. geformte Grillanzünder auf niedrigere abgeflachte Längsstege gelegt sind und oberhalb der Grillanzündermasse sich ein Paket von (in einem brennbaren Hüllbeutel eingefüllter) Bruchholzkohle befindet. Nach einer Variation der Erfindung befindet sich die Grillanzündermasse mit im Grillkohle-Beutel, der weitgehend dampfdicht und gut brennbar ist.

EP 0 109 595 A2

COMPLETE DOCUMENT

Croydon Printing Company Ltd.

Die Erfindung betrifft einen einfach zu verwendenden und kostengünstig lieferbaren Einmal-Grillset.

Üblicherweise erfolgt das Grillen auch bei Ausflügen "ins Grüne" mittels üblicher Grillöfen, welche mit Grill-Holzkohle oder auch mit Gas beheizt werden. Zum Entzünden der Holzkohle werden ganz verschiedenartige marktgängige Kohlenanzünder benutzt, die aufgrund ihrer chemisch-physikalischen Eigenschaften unterschiedliche Wirkungen entfalten bzw. spezielle Gebrauchsanweisungen nötig machen. Das Mitführen üblicher Grillgeräte im Auto ist wegen deren Sperrigkeit recht lästig, überdies muß das besagte Grillzubehör einzeln eingekauft und im Auto verstaut werden.

Diese Nachteile werden durch einen Einmal-Grillset der nachstehend beschriebenen Art vermieden. Dieser Grillset ist wegen seiner kompakten Ausgestaltung leicht mitzuführen und beinhaltet die meisten für einmaligen Grillvorgang nötigen Utensilien. Zudem sind Brenn- und Entzündungsmaterial bei ihm bezüglich Menge, Art und Anordnung sinnvoll aufeinander abgestimmt, so daß ein schnelles gleichmäßiges Anbrennen des Brennmaterials auf ganzer Fläche erfolgen kann.

Hauptbestandteil des neuen Grillsets ist eine flache Schale aus tiefgezogener Aluminiumfolie, welche auf der Innenseite des Bodens parallel laufende vorgeformte Erhebungen (Längsstege) aufweist.Hierdurch wird die Wanne selbst versteift und außerdem eine gute Belüftung des Brennmaterials ermöglicht. Die Stege können sowohl durchgehend sein als auch vor dem Rand der Schale enden. Sie sind in ihrer Form nicht festgelegt; zweckmäßige Ausgestaltungen sind etwa prismatische oder trapezoide Formen. Zweckmäßig sind die mittleren Erhebungen (Stege) alternierend höher gezogen und überragen die zwischen ihnen liegenden Stege, da sie als Unterlage für einen Beutel mit Brennmaterial (z.B. Bruchholzkohle) dienen sollen (s. die beigefügten Zeichnungen).

An der Firstkante der Längsstege sind ferner zweckmäßig Luftschlitze ausgespart, um die Verbrennung durch optimale Belüftung zu fördern.

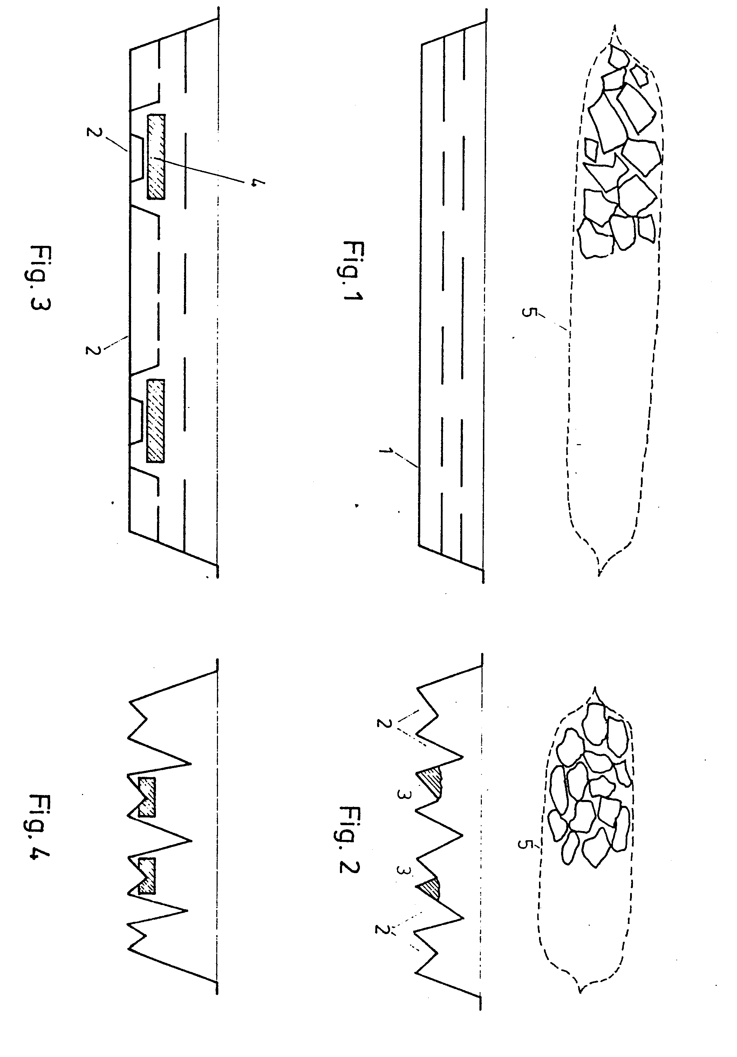

Die zwischen den vorgeformten Erhebungen entstehenden Rinnen bzw. Näpfe können ihrerseits zur Aufnahme von Grillanzündermassen dienen, wie dies in der beigefügten Zeichnung (Ausführung A) gezeigt ist.

Nach der Erfindung wird dazu vorzugsweise die zur Herstellung sog. "weißer Kohlenanzünder" verwendete Masse eingesetzt. Hierbei handelt es sich um eine sog. feste Emulsion von Petroleum - vorzugsweise rußarm verbrennende Petroleumsorten - in einem Harnstoff-Formaldehydharz. Die Herstellung erfolgt, indem man die flüssige Harzkomponente mit dem zu emulgierenden Petroleum, einem Emulgator und einer Härtersubstanz versetzt; die Erstarrung erfolgt dann binnen 20 - 30 Minuten (s. hierzu die DE-PS 1 504 012).

Die besagte Grillanzündermasse wird nun bei der Herstellung des Grillsets in noch flüssigem Zustand in die besagten Zwischenräume eingegossen und dort ggf. zusätzlich verankert, was z.B. mittels Löchern oder Haken erfolgen kann.

Nach einer anderen Ausführungsform, welche in der beigefügten Zeichnung als Ausführung B bezeichnet ist, werden fertige, vorzugsweise verpackte Riegel aus Grillanzündermassen auf die niederen Längsstege ge-

4

legt, welche sich alternierend zwischen hochgezogenen Stegen befinden. Die Stege können spitz zulaufend, aber auch abgerundet oder abgeflacht sein. Auf die hochgezogenen Stege, d.h. über die Grillanzünderriegel, kann ebenfalls ein Beutel mit Grill-Kohle gelegt werden. Der Hüllbeutel für die Holzkohle besteht zweckmäßig aus leicht entzündlichem, gleichmäßig rasch und aschenarm verbrennendem Material, z.B. geeigneten Papiersorten, Vliesstoffen, Geweben oder Kunststoff-Folien.

Nach einer dritten Ausführungsform (Ausführung C) verwendet man einen Hüllbeutel für die Holzkohle aus einer weitgehend dampfdichten, gut brennbaren Verbundfolie (etwa vom Typ Zellglas/Polyethylen 3525). Dies ermöglicht es, das zum Entzünden der Holzkohle benutzte Material in diesem Beutel selbst unterzubringen.

Letzteres kann beispielsweise so geschehen, daß man die vorstehend näher beschriebene Grillanzündermasse - eine feste Emulsion von rußarm verbrennendem Petroleum in einem Harnstoff-Formaldehydharz - als vorgeformte Stücke bzw. Stäbchen unverpackt oder auch verpackt gleichmäßig unter der zu entzündenden Holzkohle verteilt. Nach einer Variation dieser Ausführungsform der Erfindung kann man auch auf eine spezielle Grillanzündermasse überhaupt verzichten und stattdessen die Holzkohle beim Einfüllen in den Beutel durch Befeuchten (Imprägnieren) mit einer ausreichenden Menge eines flüssigen Anzündmaterials, wie einer geruchs- und rußfrei verbrennenden Mineralölfraktion vom Siedebereich zwischen 150 - 300°C, vorzugsweise 180 - 240°C, so vorbehandeln, daß die Anzündflüssigkeit beim Entzünden des Hüllbeutels (etwa an allen 4 Ecken) die Holzkohle rasch auf ganzer Fläche entzündet.

Der Einsatz eines Hüllbeutels aus gut brennbarer und dampfdichter Verbundfolie hat den Vorteil, daß das Hüllmaterial rasch, gleichmäßig und aschenarm verbrennt, das Entzünden der Holzkohle befördert sowie einen ausreichenden Schutz gegen Mineralölverluste gewährleistet. Erst durch die Verwendung von Verbundfolie wird es möglich, auf eine spezielle Grillanzündermasse überhaupt zu verzichten und die Holzkohle (Bruchkohle oder Holzkohlenbrikets) einfach direkt mit dem Anzündmaterial (Mineralöl) zu imprägnieren.

Das gesamte vorstehend beschriebene Grillset kann seinerseits als Ganzes noch in einen Beutel aus Zellglas oder Spezial-Papier eingesiegelt werden. Dies ist insbesondere bei der vorstehend beschriebenen Form A zweckmäßig, um Petroleumverluste bei der (dort ja nicht abgedichteten) Grillanzündermasse zu vermindern. Als Verpackung kann aber auch eine Faltschachtel verwendet werden.

Der Einsatz des neuartigen Grillsets kann in der Weise erfolgen, daß der Grillset aus seiner Gesamtumhüllung (welche später als Abfall-/Aschebehälter dienen kann) befreit und auf eine feuerbeständige Unterlage (Blech- bzw. Eternitschale, Grillwanne etc.) gelegt wird. Der wie vorbeschrieben verpackte Holzkohlebeutel liegt auf den hochgezogenen Längsstegen und wird an den Ecken angezündet. Der abbrennende Beutel entzündet die Grillanzünder-Massen und diese die Holzkohle. Sobald diese durchgeglüht ist, kann auf einem über den Grillset gestülpten Rost in üblicher Weise gegrillt werden.

Patentansprüche

1. Einmal-Grillset, dadurch gekennzeichnet, daß er aus einer flachen Schale (Wanne) aus Aluminiumfolie, welche auf der Innenseite ihres Bodens parallel laufende vorgeformte Erhebungen (Stege) aufweist, Anzündmaterial sowie einem über den Stegen angeordneten Beutel mit Grillkohle besteht.

2. Einmal-Grillset nach Anspruch 1, dadurch gekennzeichnet, daß Grillanzündermasse zwischen bzw. auf den Stegen der Aluminiumwanne plaziert ist.

3. Grillset nach Anspruch 1, dadurch gekennzeichnet, daß die Erhebungen (Stege) an ihrer Firstkante Luftschlitze aufweisen.

4. Grillset nach einem der Ansprüche 1 oder 3, dadurch gekennzeichnet, daß die Erhebungen alternierend hochgezogen bzw. niedrig gehalten sind.

5. Grillset nach Anspruch 1, dadurch gekennzeichnet, daß die Erhebungen prismenförmig, trapezoid oder abgerundet geformt sind.

6. Grillset nach Anspruch 1, dadurch gekennzeichnet, daß die Erhebungen bis zum Rand durchgehend oder vor dem Rand der Schale enden.

7. Grillset nach Anspruch 1, dadurch gekennzeichnet, daß in den Zwischenräumen zwischen den Erhebungen Grillanzündermasse eingegossen ist.

8. Grillset nach Anspruch 2 oder 7, dadurch gekennzeichnet, daß die Grillanzündermasse am Boden verankert ist.

9. Grillset nach Anspruch 4, dadurch gekennzeichnet, daß geformte Grillanzünder auf den niedrigen Erhebungen liegen.

10. Grillset nach Anspruch 4, dadurch gekennzeichnet, daß der Grillkohle-Beutel auf den hochgezogenen Erhebungen liegt.

11. Grillset nach Anspruch 1, dadurch gekennzeichnet, daß der Hüllbeutel für die Grillkohle aus leicht entzündlichem, gleichmäßig abbrennendem Material besteht.

12. Grillset nach Anspruch 11, dadurch gekennzeichnet, daß das Material für den Hüllbeutel Papier, Vliesstoff, leicht brennbares Gewebe oder Kunststoff-Folie ist.

13. Einmal-Grillset nach Anspruch 1, dadurch gekennzeichnet, daß der Grillkohlenbeutel aus einer weitgehend dampfdichten sowie gut brennbaren Verbundfolie besteht.

14. Einmal-Grillset nach Anspruch 13, dadurch gekennzeichnet, daß die Anzündermasse im Grillkohlenbeutel selbst untergebracht ist.

15. Grillset nach einem der Ansprüche 13 oder 14, dadurch gekennzeichnet, daß es sich bei der Anzündermasse um geformte Stücke einer festen Emulsion von Petroleum in einem Harnstoff-Formaldehydharz handelt.

16. Grillset nach Anspruch 13, dadurch gekennzeichnet, daß die geformten Stücke der Grillanzündermasse gleichmäßig unter der Holzkohle verteilt sind.

17. Grillset nach Anspruch 14, dadurch gekennzeichnet, daß es sich bei der Anzündermasse um eine geruchs- und rußfrei verbrennende Mineralölfraktion handelt, mit welcher die Holzkohle befeuchtet (imprägniert) ist.

18. Grillset nach einem der vorhergehenden Ansprüche, dadurch gekennzeichnet, daß er als Ganzes in einem Beutel und/oder in einer Schachtel verpackt ist.

Fig. 1

Fig. 2

Fig. 3

Fig. 4